# EUROPEAN PATENT APPLICATION

(11) **EP 4 383 484 A1**
(43) Date of publication of application: **12.06.2024**
(21) Application number: 22306792.7
(22) Date of filing: 06.12.2022
(51) Int. Cl.: H01S 3/00, G06N 10/40, H01S 3/067, H01S 3/23, H01S 3/16

(54) **LASER APPARATUS FOR EXCITATION OF STRONTIUM ATOMS IN A QUANTUM PROCESSOR**

(71) Applicant: Pasqal, 91300 Massy (FR)
(72) Inventor: DAREAU, Alexandre, 91300 Massy (FR); SIGNOLES, Adrien, 91300 Massy (FR)
(74) Representative: Slingsby Partners LLP

(57) **Abstract**

The present disclosure relates to a laser apparatus for excitation of Strontium atoms in a quantum processor. It comprises a fiber laser source (111) for emitting light at a wavelength of about 1064 nm; an Er-doped fiber laser (112) for emitting light at a wavelength of about 1534 nm; a fiber-coupled SHG device (114) configured to receive said light at about 1064 nm to produce light at a wavelength of about 532 nm; a fiber-coupled DFG device (113) configured to receive said light at about 1534 nm and said light at about 532 nm and produce light at a wavelength of about 813 nm; a fiber-coupled SFG device (115) configured to receive said light at about 813 nm and light at about 1064 nm partially transmitted by said fiber-coupled SHG device and produce light (15) at a wavelength of about 461 nm and partially transmit the light at about 813 nm. The transmitted light at about 813 nm (10) is configured to produce a dipolar trapping beam and the light at about 461 nm is configured to produce first MOT laser beams.

## Description

### TECHNICAL FIELD OF THE INVENTION

The present description relates to a laser apparatus for excitation of Strontium atoms in a quantum processor. Further, the present description relates to a quantum processor comprising such laser apparatus. Further, the present description relates to a method for exciting Strontium atoms in a quantum processor.

### BACKGROUND OF THE INVENTION

A quantum processor is a device that is configured to process input data by using quantum states of physical systems, such as atoms or photons, in order to implement an algorithm on said input data and generate output data. Such algorithms can be of various types, as disclosed in [REF 1]. For example, in the so-called digital (or universal) approach, algorithms comprise a sequence of quantum operations that are implemented on predetermined physical systems of the quantum processor. Alternatively, in the analog approach, algorithms comprise the reproduction of a predetermined Hamiltonian evolution by the physical systems of the quantum processor, using, for example, a plurality of quantum operations.

Neutral atom-based quantum processors generally comprise an ensemble of atoms in a vacuum system assembly wherein the quantum state of each atom is used to perform the operations of the algorithm. Said quantum state of the atom can be an excited state (such as a Rydberg state) or a fundamental state, wherein the excitation to such excited state is produced, for example, by the interaction between a laser beam and said atom.

In order to perform an algorithm with a neutral-atom based quantum processor, three steps are generally performed. In a first step, also referred to as preparation step, the atoms are spatially arranged in an array of a predetermined geometry and are prepared in a predetermined quantum state. In a second step, also referred to as quantum processing step, the quantum states of the atoms are modified to perform operations of the algorithm on the input data. In a third step, also referred to as readout step, the quantum states of the atoms are read out in order to obtain the output data.

Such steps imply the generation and manipulation of an array of neutral atoms and therefore requires the use of a laser system with a plurality of laser beams performing specific functions.

Such laser system strongly depends on the atomic species used in the quantum processor. The first generations of quantum processors are based on alkali atoms, such as rubidium, that feature one valence electron and a rather simple electronic structure.

Promising candidates for the next generations of neutral-atom based quantum processors are alkaline-earth atoms, such as strontium, that feature two valence electrons and a more complex energy structure, opening the way to better compute fidelities and/or new computing architectures. In return, using alkaline-earth atoms in quantum processing requires an even more complex laser system.

A Strontium (Sr)-based quantum processor is disclosed for example in [REF 2]. In [REF 2], a laser system for cooling, trapping and manipulating Rydberg states in optical tweezer arrays of neutral Sr-atoms is described.

More specifically, Strontium atoms are introduced in a vacuum system assembly where they are cooled down, for example by two successive cooling stages: a first cooling stage and a second cooling stage. During the first cooling stage, the atoms may be maintained in a predetermined volume of the vacuum system assembly using a first magneto-optical trap (MOT) comprising static magnetic fields. A plurality of first MOT laser beams at a wavelength of about 461 nm are configured to cool down the atoms. During the second cooling stage, the atoms may be further cooled down by a second MOT comprising static magnetic fields and a plurality of second MOT laser beams at a wavelength of about 689 nm. Further, a first repumper beam at a wavelength of about 679 nm and a second repumper beam at a wavelength of about 707 nm may be used to bring the atoms that have decayed to long-lived excited states back to a fundamental state, so that they can be further cooled down. Once the Strontium atoms are cooled down to the micro-Kelvin level, the Strontium atoms are trapped at different predetermined locations so that they can be individually addressed. Such pattern may be generated by a dipolar trapping beam sent, for example, to a spatial light modulator that focuses the beam at said predetermined locations. The dipolar trapping beam generally has a wavelength of about 813 nm, known to be a so-called "*magic wavelength*" for the Strontium atoms. The atoms can then be prepared in a predetermined quantum state, for example a metastable clock state, by using a clock beam with a wavelength close to a resonance with a transition between quantum states of Sr atoms, for example a wavelength of about 698 nm. Further, in order to perform quantum operations on the Sr atoms, a sequence of excitation pulses may be applied to the Sr atoms including one or several Rydberg beams at a wavelength of about 319 nm.

As described in [REF 2], up to eight laser sources including one Titanium-Sapphire (Ti:Sapphire) laser and seven external cavity diode lasers (ECDL), phase-locked to a common ultra-stable reference, are used to provide all laser beams to operate a Sr-based quantum processor and perform the aforementioned functions. In particular, in [REF 2], the Ti: Sapphire laser is used to provide the trapping beam at 813 nm and a 922 nm ECDL is amplified and then doubled for reaching the 461 nm wavelength of the MOT laser beam for the first stage cooling.

[REF 3] discloses an optical tweezer platform for assembling and individually manipulating a two-dimensional register of nuclear spin qubits encoded in Sr-atoms. In [REF3], the laser apparatus also comprises a Ti: Sapphire laser source for producing the dipolar trapping beam at 813 nm.

Therefore, the laser apparatuses in the systems of the prior art comprise solid state-based and/or semiconductor-based laser systems, which complexifies the structure of the neutral atom-based quantum processor operational system and undermines its robustness and reliability.

Further, laser apparatuses of the prior art (*e.g.* [REF 3]) generally include free-space coupled elements making them very sensitive to vibration-induced misalignment, hereby deteriorating efficiencies of fiber-coupling and/or of non-linear functions. As a result, such apparatuses may require tedious realignment when transported between different locations. Consequently, such laser apparatuses generally lack reliability, which hampers the commercial use of quantum processors comprising such laser apparatuses.

There is thus a need for a laser apparatus to generate laser beams in a Strontium-based quantum processor that is more efficient and reliable than in the prior art.

### SUMMARY

In what follows, the term "comprise" is synonym of (means the same as) "include" and "contains", is inclusive and open, and does not exclude other non-recited elements. Moreover, in the present disclosure, when referring to a numerical value, the terms "about" and "substantially" are synonyms of (mean the same as) a range comprised between 98% and 102%, preferably between 99% and 101%, of the numerical value.

According to a first aspect, the present description relates to a laser apparatus for excitation of Strontium atoms in a quantum processor comprising:
a fiber laser source for emitting light at a wavelength of about 1064 nm comprising a first Yb-doped fiber laser;
an Er-doped fiber laser for emitting light at a wavelength of about 1534 nm;
a first fiber-coupled second harmonic generation (SHG) device configured to receive said light at a wavelength of about 1064 nm to produce second harmonic light at a wavelength of about 532 nm and configured to partially transmit said light at a wavelength of about 1064 nm;
a first fiber-coupled difference frequency generation (DFG) device configured to receive said light at a wavelength of about 1534 nm and said second harmonic light at a wavelength of about 532 nm and produce light at a wavelength of about 813 nm; and
an ensemble of at least one fiber-coupled sum-frequency generation (SFG) device, said ensemble comprising a first fiber-coupled SFG device configured to:
   receive said light at a wavelength of about 813 nm and said light at a wavelength of about 1064 nm partially transmitted by said first fiber-coupled SHG device;
   produce light at a wavelength of about 461 nm; and
   partially transmit the light at a wavelength of about 813 nm to produce transmitted light at a wavelength of about 813 nm; wherein
   said transmitted light at a wavelength of about 813 nm is configured to produce a dipolar trapping beam for trapping individual Strontium atoms at predetermined locations; and
   said light at a wavelength of about 461 nm is configured to produce first MOT laser beams for providing a first stage of cooling of the Strontium atoms.

The laser apparatus of the first aspect comprises a cooling and trapping block, providing laser beams to cool down and trap Strontium atoms of a neutral atom-based quantum processor. Such cooling and trapping block uses an original arrangement of fiber lasers and fiber-coupled non-linear devices (SHG, SFG and DFG) which reduces the number of free-space coupled elements, therefore making the laser apparatus more robust and reliable than in the prior art. In particular, the laser apparatus according to the first aspect only comprises fiber lasers but does not comprise any diode lasers, such as external cavity diode laser (ECDL), or any solid-state lasers, such as a Titanium-Sapphire laser.

A fiber-coupled second harmonic generation device, referred to as fiber-coupled SHG device in the present description, may comprise one or more non-linear optical materials, such as Periodically Poled Potassium Titanyl Phosphate (PPKTP) or Periodically Poled Lithium Niobate (PPLN) crystals. The crystals can be used in free space, or in an optical cavity or advantageously as a waveguide in order to enhance the conversion efficiency.

A fiber-coupled difference frequency generation device, referred to as fiber-coupled DFG device in the present description, may comprise one or more non-linear optical materials, such as PPKTP or PPLN crystals. The crystals can be used in free space, or in an optical cavity or a waveguide in order to enhance the conversion efficiency.

A fiber-coupled sum frequency generation device, referred to as fiber-coupled SFG device in the present description, may comprise one or more non-linear optical materials, such as PPKTP or PPLN crystals. The crystals can be used in free space, or in an optical cavity or a waveguide in order to enhance the conversion efficiency.

In one or further embodiments, said first fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device. Light at a wavelength of about 1064 nm may thus be recycled, which enhances the overall frequency conversion efficiency of the laser apparatus.

The laser apparatus of the first aspect may comprise additional blocks to perform additional functions. Those additional blocks may also be limited to an arrangement of fiber lasers and fiber-coupled non-linear devices with no diode lasers, such as external cavity diode laser (ECDL), or no solid-state lasers, such as a Titanium-Sapphire laser.

In one or further embodiments, the laser apparatus further comprises a Tm-doped fiber laser for emitting light at a wavelength of about 1961 nm. The ensemble of at least one fiber-coupled SFG device comprises a second fiber-coupled SFG device configured to receive said light at a wavelength of about 1961 nm, receive light at a wavelength of about 1064 nm and produce light at a wavelength of about 689 nm. Said light at a wavelength of about 689 nm is configured to produce second MOT laser beams for providing a second stage of cooling of the Strontium atoms.

In one or further embodiments, said fiber laser source further comprises a second Yb-doped fiber laser for emitting said light at a wavelength of about 1064 nm received by said second fiber-coupled SFG device. Alternatively, said light at a wavelength of about 1064 nm received by said second fiber-coupled SFG device may be a light at a wavelength of about 1064 nm partially transmitted by a fiber-coupled SFG device of the ensemble of at least one fiber-coupled SFG device.

In one or further embodiments, said second fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

In one or further embodiments, the laser apparatus further comprises a Tm-doped fiber laser for emitting light at a wavelength of about 2035 nm. The ensemble of at least one fiber-coupled SFG device comprises a third fiber-coupled SFG device configured to receive said light at a wavelength of about 2035 nm, receive light at a wavelength of about 1064 nm, and produce light at a wavelength of about 698 nm. Said light at a wavelength of about 698 nm is configured to produce a clock state excitation beam in order to prepare the Strontium atoms in a clock state.

In one or further embodiments, said fiber laser source further comprises a third Yb-doped fiber laser for emitting said light at a wavelength of about 1064 nm received by said third fiber-coupled SFG device. Alternatively, said light at a wavelength of about 1064 nm received by said third fiber-coupled SFG device may be a light at a wavelength of about 1064 nm partially transmitted by a fiber-coupled SFG device of the ensemble of at least one fiber-coupled SFG device.

In one or further embodiments, said third fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

In one or further embodiments, the laser apparatus further comprises an Er-doped fiber laser for emitting light at a wavelength of about 1565 nm. The ensemble of at least one fiber-coupled SFG device comprises a fourth fiber-coupled SFG device configured to receive said light at a wavelength of about 1565 nm and light at wavelength of about 1064 nm and produce light at a wavelength of about 633 nm. Further, the laser apparatus comprises a second fiber-coupled SHG device configured to receive said light at a wavelength of about 633 nm and produce second harmonic light at a wavelength of about 317 nm. Said light at a wavelength of about 317 nm is configured to produce one or several Rydberg laser beams for transition of Strontium atoms to Rydberg states.

In one or further embodiments, said fiber laser source further comprises a fourth Yb-doped fiber laser for emitting said light at a wavelength of about 1064 nm received by said fourth fiber-coupled SFG device. Alternatively, said light at a wavelength of about 1064 nm received by said fourth fiber-coupled SFG device may be a light at a wavelength of about 1064 nm partially transmitted by a fiber-coupled SFG device of the ensemble of at least one fiber-coupled SFG device.

In one or further embodiments, said fourth fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

In one or further embodiments, the laser apparatus further comprises a Tm-doped fiber laser for emitting light at a wavelength of about 2110 nm. The ensemble of at least one fiber-coupled SFG device comprises a fifth fiber-coupled SFG device configured to receive said light at a wavelength of about 2110 nm and said light at a wavelength of about 1064 nm and produce light at a wavelength of about 707 nm. Said light at a wavelength of about 707 nm is configured to produce a first repumper beam to bring Strontium atoms that have decayed to long-lived states to a fundamental state.

In one or further embodiments, said fiber laser source further comprises a fifth Yb-doped fiber laser for emitting said light at a wavelength of about 1064 nm received by said fifth fiber-coupled SFG device. Alternatively, said light at a wavelength of about 1064 nm received by said fifth fiber-coupled SFG device may be a light at a wavelength of about 1064 nm partially transmitted by a fiber-coupled SFG device of the ensemble of at least one fiber-coupled SFG device.

In one or further embodiments, said fifth fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

In one or further embodiments, the laser apparatus further comprises a Tm-doped fiber laser for emitting light at a wavelength of about 1879 nm. The ensemble of at least one fiber-coupled SFG device comprises a sixth fiber-coupled SFG device configured to receive said light at a wavelength of about 1879 nm and light at a wavelength of about 1064 nm and produce light at a wavelength of about 679 nm. Said light at a wavelength of about 679 nm is configured to produce a second repumper beam to bring Strontium atoms that have decayed to long-lived states to a fundamental state.

In one or further embodiments, said fiber laser source further comprises a sixth Yb-doped fiber laser for emitting said light at a wavelength of about 1064 nm received by said sixth fiber-coupled SFG device. Alternatively, said light at a wavelength of about 1064 nm received by said sixth fiber-coupled SFG device may be a light at a wavelength of about 1064 nm partially transmitted by a fiber-coupled SFG device of the ensemble of at least one fiber-coupled SFG device.

In one or further embodiments, said sixth fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

In one or further embodiments, the laser apparatus further comprises a Tm-doped fiber laser for emitting light at a wavelength of about 1949 nm. The ensemble of at least one fiber-coupled SFG device comprises a seventh fiber-coupled SFG device configured to receive said light at a wavelength of about 1949 nm and light at a wavelength of about 1064 nm and produce light at a wavelength of about 688 nm. Said light at a wavelength of about 688 nm is configured to produce a third repumper beam to repump atoms that have decayed to a metastable state back to a fundamental state.

In one or further embodiments, said fiber laser source further comprises a seventh Yb-doped fiber laser for emitting said light at a wavelength of about 1064 nm received by said seventh fiber-coupled SFG device. Alternatively, said light at a wavelength of about 1064 nm received by said seventh fiber-coupled SFG device may be a light at a wavelength of about 1064 nm partially transmitted by a fiber-coupled SFG device of the ensemble of at least one fiber-coupled SFG device.

In one or further embodiments, said seventh fiber-coupled SFG device may be further configured to partially transmit light at a wavelength of about 1064 nm. Such transmitted light at a wavelength of about 1064 nm may be sent to another fiber-coupled SFG device of the ensemble of at least one fiber-coupled SFG device.

According to a second aspect, the present description relates to a Strontium (Sr) atom-based quantum processor comprising a laser apparatus according to the first aspect.

In one or further embodiments, said Sr atom-based quantum processor comprises:
a vacuum chamber assembly configured to receive Sr atoms;
a laser apparatus according to the first aspect, configured to produce laser beams for excitation of Sr atoms arranged in the vacuum system assembly;
a detection system configured to detect quantum states of Sr atoms arranged in the vacuum system assembly;
a processing unit configured to receive input data, calculate command data from the input data, and generate output data from the detected quantum states of Sr atoms;
a control unit configured to receive said command data from the processing unit and control the laser beams produced by the laser apparatus using said command data to excite Sr atoms in said vacuum chamber assembly.

According to a third aspect, the present description relates to a method for exciting Strontium atoms in a quantum processor implementing a laser source according to any embodiment of the first aspect.

In one or further embodiments, the method for exciting Strontium atoms in quantum processor comprises:
emitting light at a wavelength of about 1064 nm using a fiber laser source comprising at least a first Yb-doped fiber laser;
emitting light at a wavelength of about 1534 nm using an Er-doped fiber laser;
using a first fiber-coupled SHG device, wherein said first fiber-coupled SHG device receives said light at a wavelength of about 1064 nm, produces second harmonic light at a wavelength of about 532 nm and partially transmits said light at a wavelength of about 1064 nm;
using a first fiber-coupled DFG device, wherein said first fiber-coupled DFG device receives said light at a wavelength of about 1534 nm and said second harmonic light at a wavelength of about 532 nm and produces light at a wavelength of about 813 nm; and
using a first fiber-coupled SFG device of an ensemble of at least one fiber-coupled SFG device, wherein said first fiber-coupled SFG device:
   receives said light at a wavelength of about 813 nm and said light at a wavelength of about 1064 nm partially transmitted by the first fiber-coupled SHG device;
   produces light at a wavelength of about 461 nm;
   partially transmits the light at a wavelength of about 813 nm to produce transmitted light at a wavelength of about 813 nm;
   wherein said transmitted light at a wavelength of about 813 nm is configured to produce a dipolar trapping beam for trapping individual Strontium atoms at predetermined locations; and
   wherein said light at a wavelength of about 461 nm is configured to produce first MOT laser beams for providing a first stage of cooling of the Strontium atoms.

In one or further embodiments, the first fiber-coupled SFG device further partially transmit said light at a wavelength of about 1064 nm. Said transmitted light may be sent to another SFG device of the ensemble of at least one fiber-coupled SFG device.

### BRIEF DESCRIPTION OF DRAWINGS

Other advantages and features of the invention will become apparent on reading the description, illustrated by the following figures which represent:
FIG. 1 is a block diagram illustrating a first embodiment of a laser apparatus for addressing Strontium atoms in a quantum processor according to the present description;
FIG. 2 is a block diagram illustrating another embodiment of a laser apparatus for addressing Strontium atoms in a quantum processor according to the present description, with additional blocks.
FIG. 3 is a block diagram illustrating another embodiment of a laser apparatus for addressing Strontium atoms in a quantum processor according to the present description, with additional blocks, and wherein the fiber laser source for emitting light at a wavelength of about 1064 nm only comprises one Yb-doped fiber laser, the light at a wavelength of about 1064 nm being recycled in all blocks.
FIG. 4 is a block diagram illustrating a block of a laser apparatus according to the first aspect, wherein said block is configured to produce light at a wavelength of about 688 nm in order to generate a third repumper beam.
FIG. 5 is a block diagram illustrating another embodiment of a laser apparatus for addressing Strontium atoms in a quantum processor according to the present description, with additional blocks, and wherein the fiber laser source for emitting light at a wavelength of about 1064 nm comprises a couple of Yb-doped fiber laser, the light at a wavelength of about 1064 nm being recycled within a finite subset of blocks.
FIG. 6 is a block diagram illustrating an embodiment of a quantum processor comprising a laser apparatus according to the present description.

### DETAILED DESCRIPTION

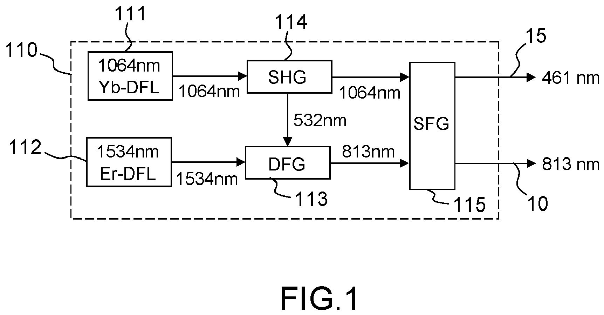

FIG. 1 illustrates a laser apparatus according to embodiments. The laser apparatus illustrated in FIG. 1 is composed of a single block 110, referred to as cooling and trapping block, which is configured to produce a dipolar trapping beam for trapping individual Strontium atoms at predetermined locations and to produce first MOT laser beams for providing a first stage of cooling of the Strontium atoms.

The cooling and trapping block 110 comprises a laser source with a Yb-doped fiber laser (Yb-DFL) 111 emitting light at a wavelength of about 1064 nm and an Er-doped fiber laser (Er-DFL) 112 emitting light at a wavelength of about 1534 nm. Alternatively, according to embodiments, the laser apparatus may comprise other fiber-coupled laser sources as it will be described later.

The light at 1064 nm is received by a fiber-coupled second harmonic generation (SHG) device 114, for example a Periodically Poled Lithium Niobate (PPLN) waveguide, where it is frequency-doubled in order to emit light at a wavelength of about 532 nm. Further, a portion of the light at 1064 nm that is received by the SHG device is transmitted.

The light at 1534 nm which is emitted by the Er-DFL 112 and the light at 532 nm which is produced by the SHG device 114 are received by a fiber-coupled difference frequency generation (DFG) device 113 in order to generate light at a wavelength of about 813 nm. The DFG device may for example comprise one or more non-linear optical materials, such as Periodically Poled Potassium Titanyl Phosphate (PPKTP) or PPLN crystals. The crystals can be used in free space, or in an optical cavity or a waveguide in order to enhance the conversion efficiency.

The light at 813 nm which is generated by the DFG device 113 and the light at 1064 nm that is partially transmitted by the SHG device 114 are received by a fiber-coupled sum frequency generation (SFG) device 115 in order to generate light at a wavelength of about 461 nm. The SFG device may for example comprise one or more non-linear optical materials, such as PPKTP or PPLN crystals. The crystals can be used in free space, or in an optical cavity or a waveguide in order to enhance the conversion efficiency. Further, a portion of the light at 813 nm that is received by the SFG device is transmitted. Although not shown in Fig. 1, the fiber-coupled SFG device 115 may further partially transmit said light at a wavelength of about 1064 nm.

The transmitted light 10 at a wavelength of about 813 nm is configured to produce a dipolar trapping beam for trapping individual Strontium atoms at predetermined locations and the light 15 at a wavelength of about 461 nm is configured to produce first MOT laser beams for providing a first stage of cooling of the Strontium atoms.

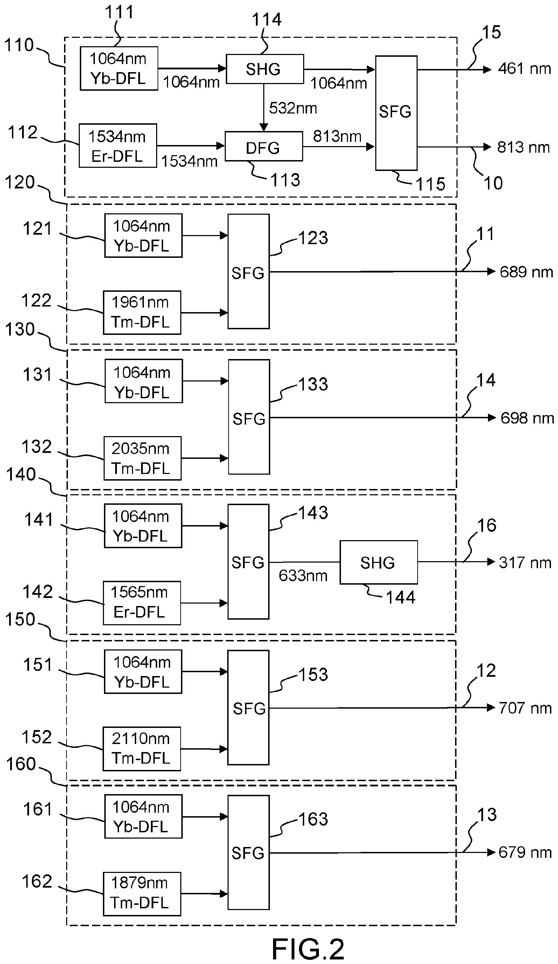

FIG. 2 represents a laser apparatus comprising said cooling and trapping block 110 and further comprising additional blocks 120, 130, 140, 150, 160 configured to produce respectively second MOT beams 11, a clock excitation beam 14 to prepare the Strontium atoms in a clock state, one or several Rydberg laser beam 16 for transition of Strontium atoms to Rydberg states, a first repumper beam 12 and a second repumper beam 13. Although 6 blocks are illustrated in Fig. 2, it will be apparent for the skilled man than more or less block may be implemented.

In the embodiment of the laser apparatus as shown in Fig. 2, the laser for emitting light at a wavelength of about 1064 nm comprises a Yb-doped fiber laser (Yb-DFL) for each block. This guarantees that enough optical power at the wavelength of about 1064 nm is available in each block.

In addition to a second Yb-doped fiber laser (Yb-DFL) 121 for emitting light at a wavelength of about 1064 nm, the second block 120 comprises a Tm-doped fiber laser (Tm-DFL) 122 for emitting light at a wavelength of about 1961 nm. A second fiber-coupled SFG device 123 receives said light at a wavelength of about 1961 nm, the light at a wavelength of about 1064 nm emitted by the second Yb-DFL 121 and produce light 11 at a wavelength of about 689 nm. Although not shown in Fig. 2, the second fiber-coupled SFG device 123 may further partially transmit said light at a wavelength of about 1064 nm. The light at a wavelength of about 689 nm is configured to produce second MOT laser beams for providing a second stage of cooling of the Strontium atoms.

In addition to a third Yb-doped fiber laser (Yb-DFL) 131 for emitting light at a wavelength of about 1064 nm, the third block 130 comprises a Tm-doped fiber laser 132 for emitting light at a wavelength of about 2035 nm. A third fiber-coupled SFG device 133 receives said light from the at least second Tm-doped fiber laser and the light at a wavelength of about 1064 nm emitted by the Yb-doped fiber laser (Yb-DFL) 131 to produce light 14 at a wavelength of about 698 nm. Although not shown in Fig. 2, the third fiber-coupled SFG device 133 may further partially transmit said light at a wavelength of about 1064 nm. The light at a wavelength of about 698 nm is configured to produce a clock state excitation beam in order to prepare the Strontium atoms in a clock state.

In addition to a fourth Yb-doped fiber laser (Yb-DFL) 141 for emitting light at a wavelength of about 1064 nm, the fourth block 140 comprises an Er-doped fiber laser (Er-DFL) 142 for emitting light at a wavelength of about 1565 nm. A fourth fiber-coupled SFG device 143 receives said light from the Er-doped fiber laser 142 and the light at a wavelength of about 1064 nm emitted by the fourth Yb-doped fiber laser (Yb-DFL) 141 to produce light at a wavelength of about 633 nm. Although not shown in Fig. 2, the fourth fiber-coupled SFG device 143 may further partially transmit said light at a wavelength of about 1064 nm. The fourth block 140 further comprises a second fiber-coupled SHG device 144 configured to receive said light at a wavelength of about 633 nm from the fourth fiber-coupled SFG device 143 and produce second harmonic light 16 at a wavelength of about 317 nm. The light at a wavelength of about 317 nm is configured to produce one or several Rydberg laser beams for transition of Strontium atoms to Rydberg states.

In addition to a fifth Yb-doped fiber laser (Yb-DFL) 151 for emitting light at a wavelength of about 1064 nm, the fifth block 150 comprises a Tm-doped fiber laser 152 for emitting light at a wavelength of about 2110 nm. A fifth fiber-coupled SFG device 153 receives said light from the Tm-doped fiber laser 152 and the light at a wavelength of about 1064 nm emitted by the fifth Yb-doped fiber laser (Yb-DFL) 151 to produce light 12 at a wavelength of about 707 nm. Although not shown in Fig. 2, the fifth fiber-coupled SFG device 153 may further partially transmit said light at a wavelength of about 1064 nm. The light at a wavelength of about 707 nm is configured to produce a first repumper beam to bring Strontium atoms that have decayed to long-lived states to a fundamental state.

In addition to a sixth Yb-doped fiber laser (Yb-DFL) 161 for emitting light at a wavelength of about 1064 nm, the sixth block 160 comprises a Tm-doped fiber laser 162 for emitting light at a wavelength of about 1879 nm. A sixth fiber-coupled SFG device 163 receives said light from the Tm-doped fiber laser 162 and the light at a wavelength of about 1064 nm emitted by the sixth Yb-doped fiber laser (Yb-DFL) 161 to produce light 13 at a wavelength of about 679 nm. Although not shown in Fig. 2, the sixth fiber-coupled SFG device 163 may further partially transmit said light at a wavelength of about 1064 nm. The light at a wavelength of about 679 nm is configured to produce a second repumper beam to bring Strontium atoms that have decayed to long-lived states to a fundamental state.

The laser apparatus as described in Fig. 2 uses an original arrangement of fiber lasers and fiber-coupled non-linear devices (SHG, SFG and DFG) which reduces the number of free-space coupled elements, therefore making the laser apparatus more robust and reliable than in the prior art. In particular, the laser apparatus only comprises fiber lasers but does not comprise any diode lasers, such as external cavity diode laser (ECDL), or any solid-state lasers, such as a Titanium-Sapphire laser.

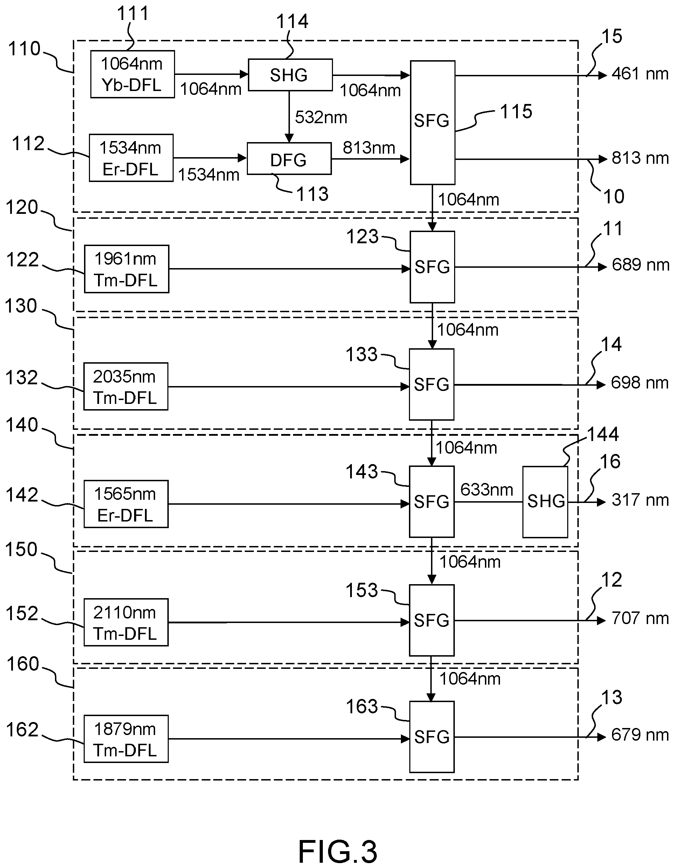

FIG. 3 is a block diagram illustrating another embodiment of a laser apparatus for addressing Strontium atoms in a quantum processor according to the present description.

In this embodiment, the fiber laser source for emitting light at a wavelength of about 1064 nm only comprises one Yb-doped fiber laser 111. As illustrated in the block diagram of Fig. 3, the light at a wavelength of about 1064 nm received by the SFG device of each block 120, 130, 140, 150, 160 is light at a wavelength of about 1064 nm partially transmitted by a SFG device of another block. In other words, the light at a wavelength of about 1064 nm is recycled in all blocks. This architecture allows to reduce the number of laser sources and to optimize the overall power requirements, thus improving the overall frequency conversion efficiency by recycling the remaining pump power at 1064 nm.

More particularly, in the embodiment as shown in Fig. 3, light partially transmitted by the first SFG device 115 of the first block 110 is received by the second SFG device 123 of the second block 120. Light partially transmitted by the second SFG device 123 of the second block 110 is received by the third SFG device 133 of the third block 130, etc. However, such arrangement is not limitative and the SFG device of any one of the blocks 120, 130, 140, 150, 160 could receive light partially transmitted by any other SFG device of the plurality of SFG devices of the laser apparatus.

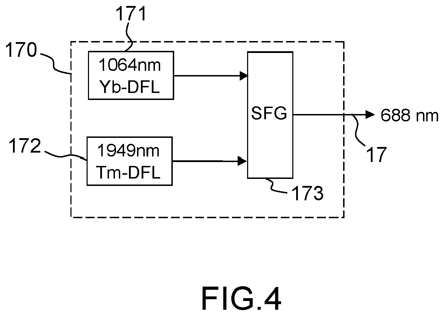

FIG. 4 is a block diagram that illustrates an additional block 170 of a laser apparatus according to the first aspect. Such additional block is configured to produce light at a wavelength of about 688 nm in order to generate a third repumper beam.

The block 170 in the embodiment of Fig. 4 comprises a seventh Yb-doped fiber laser (Yb-DFL) 171 for emitting light at a wavelength of about 1064 nm and a Tm-doped fiber laser 172 for emitting light at a wavelength of about 1949 nm. Further, it comprises a seventh fiber-coupled SFG device 173 configured to receive the light at a wavelength of about 1949 nm from the Tm-doped fiber laser and the light at a wavelength of about 1064 nm emitted by the Yb-DFL 171 to produce light 17 at a wavelength of about 688 nm. Although not shown in Fig. 4, the seventh fiber-coupled SFG device 173 may further partially transmit said light at a wavelength of about 1064 nm. The light at a wavelength of about 688 nm is configured to produce a third repumper beam to bring Strontium atoms that have decayed to long-lived states to a fundamental state.

The block 170, as any other additional block, may be added in the arrangement of a laser apparatus as shown in Fig. 2. It may also be added in the arrangement of a laser apparatus as shown in Fig. 3. In this case, an additional Yb-doped fiber laser for emitting light at a wavelength of about 1064 nm is no longer required. The SFG device 173 may receive light partially transmitted by any other SFG device of the plurality of SFG devices of the laser apparatus. Further, the SFG device 173 may partially transmit light at a wavelength of about 1064 nm, and such transmitted light may be received by any other SFG device of the plurality of SFG devices of the laser apparatus.

Obviously, hybrid arrangements are also possible in which the laser apparatus comprises a plurality of Yb-doped fiber lasers for emitting light at a wavelength of about 1064 nm but not as many as the number of blocks, the light at a wavelength of about 1064 nm being recycled within a finite subset of blocks.

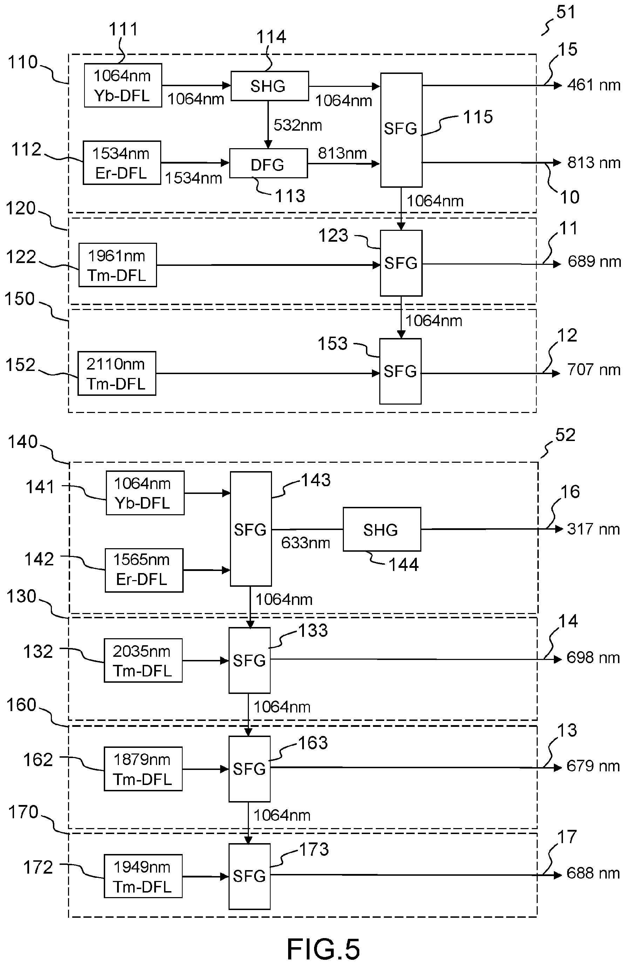

FIG. 5 is a block diagram illustrating such hybrid arrangement in another embodiment of a laser apparatus according to the present description. The laser apparatus comprises seven blocks but only two Yb-doped fiber lasers 111, 141 for emitting light at a wavelength of about 1064 nm.

Each one of the blocks 110 - 170 has already been described and will not be described again for sake of conciseness.

In the embodiment of Fig. 5, only one Yb-doped fiber laser (Yb-DFL) 111 is used for blocks 110, 120, 150 and only one Yb-doped fiber laser (Yb-DFL) 141 is used for blocks 140, 130, 160, 170. Such arrangement is a good compromise to reduce the number of laser sources and to optimize the overall power requirements, thus improving the overall frequency conversion efficiency by recycling the remaining optical pump power at about 1064 nm, while ensuring that each block receives enough optical pump power at about 1064 nm to produce a sufficient output power at the target wavelengths.

Obviously, the arrangement of Fig. 5 is not limitative and other arrangements are possible with a plurality of Yb-doped fiber lasers for emitting light at a wavelength of about 1064 nm, each of them used to feed a subset of blocks, the light at a wavelength of about 1064 nm being recycled in said subset of blocks.

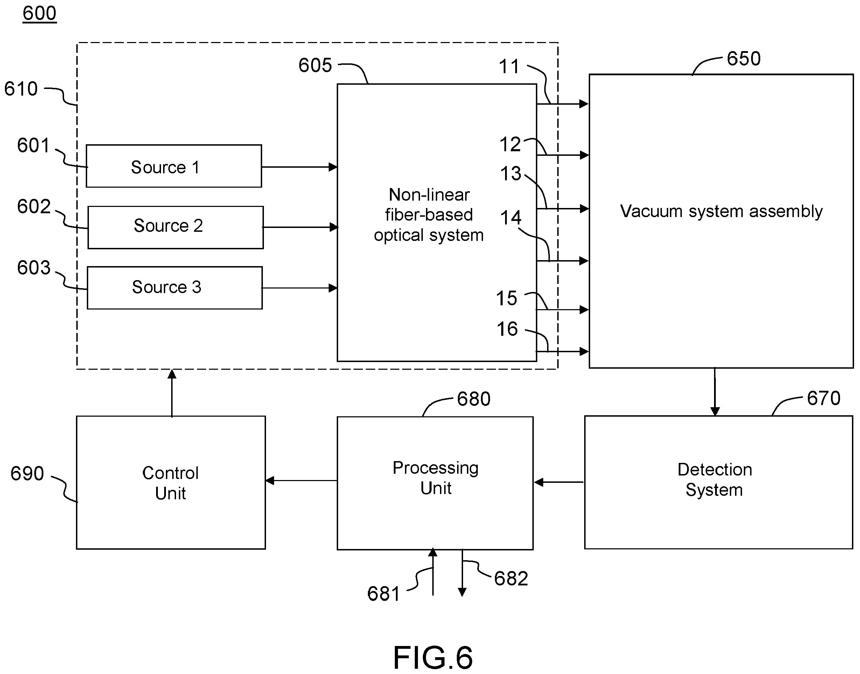

FIG. 6 represents a schematic view of a quantum processor 600 configured to implement an algorithm on input data 681 and generate output data 682.

According to one or further embodiments, the quantum processor 600 comprises a laser apparatus 610 according to the present description, a vacuum system assembly 650, a detection system 670, a processing unit 680 and a control unit 690.

The processing unit 680 is in communication with the control unit 690. The processing unit 680 may be configured to receive input data 681 from an external user and generate command data that are sent to the control unit 690. The control unit 690 may use the command data in order to control the laser apparatus 610 so that the laser apparatus 610 produces a plurality of laser beams 11 - 16. Such laser beams comprise first MOT beams 15 and a dipolar trapping beam 10. Such laser beams may further comprise at least one of the following laser beams: second MOT beams 11, a clock excitation beam 14, one or several Rydberg laser beam 16, at least a first repumper beam 12, a second repumper beam 13 is shown. As previously explained with reference to Fig. 4, the laser beams may further comprise a third repumper beam.

The vacuum system assembly 650 comprises a vacuum chamber and a plurality of Strontium atoms. The vacuum system assembly 650 is configured to receive the plurality of laser beams (11 - 16) in order to implement operations of an algorithm on the input data 681. The operations of the algorithm are performed using quantum states of the Strontium atoms in the vacuum chamber.

According to one or further embodiments, the vacuum system assembly 650 further comprises free-space optical elements configured to direct said beams to said Strontium atoms, such as optical isolators, lenses, mirrors, waveplates, polarizers. Such vacuum system can also comprise other free-space optical elements, for example optical modulators.

More specifically, according to embodiments, Strontium atoms may be introduced in the vacuum system assembly 650 where they are cooled down by two successive cooling stages: a first cooling stage and a second (optional) cooling stage. During the first cooling stage, the atoms may be maintained in a predetermined volume of the vacuum system assembly using a first magneto-optical trap (MOT) comprising static magnetic fields and a plurality of first MOT laser beams at a wavelength of about 461 nm so that the atoms cool down. Such first MOT laser beams at a wavelength of about 461 nm may be produced by a block 110 as described above. During the second cooling stage the atoms may further be cooled down by a second MOT comprising static magnetic fields and a plurality of second MOT laser beams at a wavelength of about 689 nm. Such second MOT laser beams at a wavelength of about 689 nm may be produced by a block 120 as described above. Such first MOT laser beams and second MOT laser beams aim at both reducing the kinetic energy of the atoms (i.e. their temperature) and, in combination with static magnetic fields, at introducing a restoring force that imposes the atoms to remain at a nearly fixed location, and in their fundamental state.

Further, a first repumper beam at a wavelength of about 679 nm and a second repumper beam at a wavelength of about 707 nm may be used to bring the atoms that have decayed to long-lived excited states back to a fundamental state, so that they can be further cooled down. Such first repumper beam at a wavelength of about 679 nm and second repumper beam at a wavelength of about 707 may be produced respectively by blocks 160, 150 as described above.

Once the Strontium atoms are cooled down, for example a temperature less than about 100 micro-Kelvin, the Strontium atoms are trapped at different predetermined locations so that they can be individually addressed. More specifically, the atoms are arranged in an array of predetermined dimensions by creating a 1D, 2D, or 3D patterns of dipolar optical traps, each trap comprising at most one atom. Such pattern is generated by a dipolar trapping beam, such dipolar trapping beam being, for example, sent to a spatial light modulator that focuses the beam at said predetermined locations. The dipolar trapping beam generally has a wavelength of about 813 nm, known to be a so-called magic wavelength for the Strontium atoms. Such dipolar trapping beam at a wavelength of about 813 nm may be produced by a block 110 as described above.

The atoms may then be prepared in a predetermined quantum state, for example a metastable clock state, by using a clock beam with a wavelength close to a resonance with a transition between quantum states of Sr atoms, for example a wavelength of about 698 nm. Such clock beam at a wavelength of about 698 nm may be produced by a block 130 as described above.

Optionally, the atoms may also be prepared to metastable states (such as the aforementioned clock state) by using a third repumper beam at a wavelength of about 688 nm, cooperating with the second MOT beam and the first repumper beam or the second repumper beam. The atoms can also be prepared in other predetermined quantum state by using a two-photon Raman transition with light derived from the second MOT beam (see [REF 2]). Such third repumper beam at a wavelength of about 688 nm may be produced by a block 170 as described above.

Further, in order to perform quantum operations on the Sr atoms, a sequence of excitation pulses may be applied to the Sr atoms using a plurality of laser beams, including one or several Rydberg beams at a wavelength of about 317 nm. Such one or several Rydberg beams at a wavelength of about 317 nm may be produced by a block 140 as described above.

Further, the quantum states of the Strontium atoms obtained after the quantum operations may be read out using light derived from the first MOT beams.

After an algorithm has been implemented on the Strontium atoms, the quantum states of the Strontium atoms of the vacuum chamber are detected by a detection system 670 and analyzed by a processing unit 680 in order to generate output data 682.

According to one or further embodiments, the laser apparatus 610 comprises a plurality of fiber-coupled laser sources (601 - 603 illustrated in Fig. 6) as described in the embodiments above, and a non-linear fiber-based optical system 605.

The non-linear fiber-based optical system 605 is configured to receive light emitted from said plurality of laser sources and generate said plurality of laser beams (10 - 16). In the example shown in FIG. 6, only three laser sources are represented, however embodiments of the laser apparatus 610 may comprise more than three sources. For example, in order to generate all the beams of the plurality of laser beams produced by the laser apparatus, a plurality of fiber-coupled laser sources may be used, for example between about 5 and about 15 fiber-coupled laser sources. In any case, with only fiber-coupled laser sources, and no diode lasers nor solid-state lasers, the laser apparatus is more robust and reliable than in the prior art.

While the invention has been described with respect to a limited number of embodiments, those skilled in the art, having benefit of this disclosure, will appreciate that other embodiments can be devised which do not depart from the spirit of the invention as disclosed herein. Accordingly, the scope of the invention should be limited only by the attached claims.

### REFERENCES

[REF1] HENRIET, Loic, BEGUIN, Lucas, SIGNOLES, Adrien, et al. Quantum computing with neutral atoms. Quantum, 2020, vol. 4, p. 327.
[REF2] GIUNTA, Michele, NOTERMANS, Remy, LILIENFEIN, Nikolai, et al. Comb-disciplined Laser System to Operate Strontium Atoms in Magic Tweezer Arrays. In : Quantum 2.0. Optica Publishing Group, 2020. paper QTu8A.3.
[REF 3] BARNES, Katrina, BATTAGLINO, Peter, BLOOM, Benjamin J., et al. Assembly and coherent control of a register of nuclear spin qubits. Nature Communications, 2022, vol. 13, no 1, p. 1-10.

## Claims

1. A laser apparatus for excitation of Strontium atoms in a quantum processor comprising:
a fiber laser source for emitting light at a wavelength of about 1064 nm comprising a first Yb-doped fiber laser (111);
an Er-doped fiber laser (112) for emitting light at a wavelength of about 1534 nm;
a first fiber-coupled second harmonic generation, SHG, device (114) configured to receive said light at a wavelength of about 1064 nm to produce second harmonic light at a wavelength of about 532 nm and to partially transmit said light at a wavelength of about 1064 nm;
a first fiber-coupled difference frequency generation, DFG, device (113) configured to receive said light at a wavelength of about 1534 nm and said second harmonic light at a wavelength of about 532 nm and produce light at a wavelength of about 813 nm; and
an ensemble of at least one fiber-coupled sum frequency generation, SFG, device, said ensemble comprising a first fiber-coupled SFG device (115) configured to:
receive said light at a wavelength of about 813 nm and said light at a wavelength of about 1064 nm partially transmitted by said first fiber-coupled SHG device (114);
produce light (15) at a wavelength of about 461 nm; and
partially transmit the light at a wavelength of about 813 nm to produce transmitted light (10) at a wavelength of about 813 nm; wherein
said transmitted light (10) at a wavelength of about 813 nm is configured to produce a dipolar trapping beam for trapping individual Strontium atoms at predetermined locations; and
said light (15) at a wavelength of about 461 nm is configured to produce first MOT laser beams for providing a first stage of cooling of the Strontium atoms.

2. The laser apparatus as claimed in claim 1, further comprising:
a Tm-doped fiber laser (122) for emitting light at a wavelength of about 1961 nm; wherein
the ensemble of at least one fiber-coupled SFG device comprises a second fiber-coupled SFG device (123) configured to:
receive said light at a wavelength of about 1961 nm;
receive light at a wavelength of about 1064 nm; and
produce light (11) at a wavelength of about 689 nm; wherein
said light at a wavelength of about 689 nm is configured to produce second MOT laser beams for providing a second stage of cooling of the Strontium atoms.

3. The laser apparatus as claimed in claim 2, wherein said light at a wavelength of about 1064 nm received by said second fiber-coupled SFG device (123) is a light at a wavelength of about 1064 nm partially transmitted by a fiber-coupled SFG device of the ensemble of at least one fiber-coupled SFG device.

4. The laser apparatus as claimed in any one of the preceding claims, further comprising:
a Tm-doped fiber laser (132) for emitting light at a wavelength of about 2035 nm; wherein
the ensemble of at least one fiber-coupled SFG device comprises a third fiber-coupled SFG device (133) configured to:
receive said light at a wavelength of about 2035 nm;
receive light at a wavelength of about 1064 nm; and
produce light (14) at a wavelength of about 698 nm; wherein
said light at a wavelength of about 698 nm is configured to produce a clock state excitation beam in order to prepare the Strontium atoms in a clock state.

5. The laser apparatus as claimed in claim 4, wherein said light at a wavelength of about 1064 nm received by said third fiber-coupled SFG device (133) is a light at a wavelength of about 1064 nm partially transmitted by a fiber-coupled SFG device of the ensemble of at least one fiber-coupled SFG device.

6. The laser apparatus as claimed in any one of the preceding claims, further comprising:
an Er-doped fiber laser (142) for emitting light at a wavelength of about 1565 nm; wherein
the ensemble of at least one fiber-coupled SFG device comprises a fourth fiber-coupled SFG device configured to:
receive said light at a wavelength of about 1565 nm and light at wavelength of about 1064 nm; and
produce light at a wavelength of about 633 nm;
a second fiber-coupled SHG device (144) configured to receive said light at a wavelength of about 633 nm and produce second harmonic light (16) at a wavelength of about 317 nm;
wherein said light at a wavelength of about 317 nm is configured to produce one or several Rydberg laser beams for transition of Strontium atoms to Rydberg states.

7. The laser apparatus as claimed in claim 6, wherein said light at a wavelength of about 1064 nm received by said fourth fiber-coupled SFG device (143) is a light at a wavelength of about 1064 nm partially transmitted by a fiber-coupled SFG device of the ensemble of at least one fiber-coupled SFG device.

8. The laser apparatus as claimed in any one of the preceding claims, further comprising:
a Tm-doped fiber laser (152) for emitting light at a wavelength of about 2110 nm; wherein
the ensemble of at least one fiber-coupled SFG device comprises a fifth fiber-coupled SFG device (153) configured to:
receive said light at a wavelength of about 2110 nm and said light at a wavelength of about 1064 nm; and
produce light (12) at a wavelength of about 707 nm;
wherein said light at a wavelength of about 707 nm is configured to produce a first repumper beam to bring Strontium atoms that have decayed to long-lived states to a fundamental state.

9. The laser apparatus as claimed in claim 8, wherein said light at a wavelength of about 1064 nm received by said fifth fiber-coupled SFG device (153) is a light at a wavelength of about 1064 nm partially transmitted by a fiber-coupled SFG device of the ensemble of at least one fiber-coupled SFG device.

10. The laser apparatus as claimed in any one of the preceding claims, further comprising:
a Tm-doped fiber laser (162) for emitting light at a wavelength of about 1879 nm; wherein
the ensemble of at least one fiber-coupled SFG device comprises a sixth fiber-coupled SFG device (163) configured to:
receive said light at a wavelength of about 1879 nm and light at a wavelength of about 1064 nm; and
produce light (13) at a wavelength of about 679 nm;
wherein said light at a wavelength of about 679 nm is configured to produce a second repumper beam to bring Strontium atoms that have decayed to long-lived states to a fundamental state.

11. The laser apparatus as claimed in claim 10, wherein said light at a wavelength of about 1064 nm received by said sixth fiber-coupled SFG device (163) is a light at a wavelength of about 1064 nm partially transmitted by a fiber-coupled SFG device of the ensemble of at least one fiber-coupled SFG device.

12. The laser apparatus as claimed in any one of the preceding claims, further comprising:
a Tm-doped fiber laser (172) for emitting light at a wavelength of about 1949 nm; wherein
the ensemble of at least one fiber-coupled SFG device comprises a seventh fiber-coupled SFG device (173) configured to:
receive said light at a wavelength of about 1949 nm and light at a wavelength of about 1064 nm; and
produce light (17) at a wavelength of about 688 nm;
wherein said light at a wavelength of about 688 nm is configured to produce a third repumper beam to repump atoms that have decayed to a metastable state back to a fundamental state.

13. The laser apparatus as claimed in claim 12, wherein said light at a wavelength of about 1064 nm received by said seventh fiber-coupled SFG device (173) is a light at a wavelength of about 1064 nm partially transmitted by a fiber-coupled SFG device of the ensemble of at least one fiber-coupled SFG device.

14. The laser apparatus as claimed in any one of the preceding claims, wherein said fiber laser source further comprises a plurality of Yb-doped fiber lasers (121, 131, 141, 151, 161, 171) for emitting light at a wavelength of about 1064 nm.

15. A Strontium (Sr) atom-based quantum processor comprising:
a vacuum chamber assembly configured to receive Sr atoms;
a laser apparatus according to any of the preceding claims configured to produce laser beams (11, 12, 13, 14, 15, 16, 17) for excitation of Sr atoms arranged in the vacuum system assembly;
a detection system configured to detect quantum states of Sr atoms arranged in the vacuum system assembly;
a processing unit configured to receive input data, calculate command data from the input data, and generate output data from the detected quantum states of Sr atoms;
a control unit configured to receive said command data from the processing unit and control the laser beams produced by the laser apparatus using said command data to excite Sr atoms in said vacuum chamber assembly.

16. A method for exciting Strontium atoms in a quantum processor comprising:
emitting light at a wavelength of about 1064 nm using a fiber laser source comprising at least a first Yb-doped fiber laser (111);
emitting light at a wavelength of about 1534 nm using an Er-doped fiber laser (112);
using a first fiber-coupled SHG device (114), wherein said first fiber-coupled SHG device receives said light at a wavelength of about 1064 nm, produces second harmonic light at a wavelength of about 532 nm and partially transmits said light at a wavelength of about 1064 nm;
using a first fiber-coupled DFG device (113), wherein said first fiber-coupled DFG device receives said light at a wavelength of about 1534 nm and said second harmonic light at a wavelength of about 532 nm and produces light at a wavelength of about 813 nm; and
using a first fiber-coupled SFG device (115) of an ensemble of at least one fiber-coupled SFG device, wherein said first fiber-coupled SFG device:
receives said light at a wavelength of about 813 nm and said light at a wavelength of about 1064 nm partially transmitted by the first fiber-coupled SHG device (114);
produces light (15) at a wavelength of about 461 nm;
partially transmits the light at a wavelength of about 813 nm to produce transmitted light (10) at a wavelength of about 813 nm;
wherein said transmitted light (10) at a wavelength of about 813 nm is configured to produce a dipolar trapping beam for trapping individual Strontium atoms at predetermined locations; and
wherein said light (15) at a wavelength of about 461 nm is configured to produce first MOT laser beams for providing a first stage of cooling of the Strontium atoms.
